# EUROPEAN PATENT APPLICATION

(11) **EP 3 799 078 A1**
(43) Date of publication of application: **31.03.2021**
(21) Application number: 20197782.4
(22) Date of filing: 23.09.2020
(51) Int. Cl.: H01B 3/42, C08G 63/183, C08G 63/199, H01B 7/08

(54) **FLEXIBLE FLAT CABLE WITH POLYCYCLOHEXYLENEDIMETHYLENE TEREPHTHALATE FILM AND METHOD OF MAKING FLEXIBLE FLAT CABLE**

(30) Priority: 24.09.2019 KR 20190117163
(71) Applicant: Jin Young Global Co., Ltd., Gyeongsangbuk-do (KR)
(72) Inventor: KIM, Kyong Do, Gyeongsangbuk-do (KR); KIM, Dong Sik, Gyeongsangbuk-do (KR)
(74) Representative: dompatent von Kreisler Selting Werner - Partnerschaft von Patent- und Rechtsanwälten mbB

(57) **Abstract**

The present invention provides an FFC using a PCT film as an insulating coating layer. The FFC comprises a lower insulating coating layer made of the PCT film; a lower adhesive layer made of polyester formed through a lower primer layer made of polyurethane material on the upper surface of the lower insulating coating layer; an upper insulating coating layer made of the PCT film; an upper adhesive layer made of polyester formed through an upper primer layer made of polyurethane material on a lower surface of the upper insulating coating layer; and a conductor wire layer interposed between the lower adhesive layer and the upper adhesive layer.

## Description

### [Technical Field]

The present invention relates to a flexible flat cable (FFC) (hereinafter, abbreviated as "FFC"), and more particularly, it relates to an FFC using a film made of poly cyclohexylene dimethylene terephthalate (hereinafter, abbreviated as "PCT") as an insulating coating layer.

Further, the present invention relates to a method of manufacturing an FFC using the PCT film as an insulating coating layer.

### [Background of the Invention]

An FFC is a flexible and flat cable with a built-in conductor layer composed of a plurality of conductor wires. Compared to a wire harness, it is economical because it is inexpensive and can be folded into various shapes. There is no limit for selecting a number of conductor wires to be used, and it has the advantage of being able to be installed in a narrow space. Therefore, the FFC is good to be used as a data communication line or a power line for lighter and slimmer electronic products, and it is used in various industrial fields (automobiles, medical devices, semiconductor equipment, computers, etc.).

In general, the FFC has a structure in which a conductor wire layer is positioned between a flexible lower member and a flexible upper member. Here, the lower member has a structure in which a lower insulating coating layer, a lower primer layer, and a lower adhesive layer are stacked from bottom to top, and the upper member has a structure in which an upper insulating coating layer, an upper primer layer, and an upper adhesive layer are stacked from top to bottom. The conductor wire layer composed of a plurality of conductor wires is interposed between the lower adhesive layer and the upper adhesive layer.

In addition, the length of the upper member is provided to be shorter (or longer) than the length of the lower member so that both ends of the conductor wire layer are exposed to the outside. And below (or above) the exposed part of both ends of the conductor wire layer, a reinforcing film layer is attached to the bottom (or top) of the lower (or upper) insulating coating layer, which keeps both ends of the FFC flat and makes both ends of the FFC to be easily connected to a connector at the same time.

A method for manufacturing an FFC having the above structure is disclosed in Korean Patent Registration No. 10- 0473632 (Flexible Flat Cable Laminating Method).

In this patent, at first, the exposed window for exposing both ends of the conductor wire layer is perforated in a upper FFC fabric to be a upper member and in a lower FFC fabric to be a lower members and a reinforcing film is thermally adhered in the area of the FFC fabrics with the exposed window. Then, conductor wires are introduced between the upper and the lower FFC fabrics to perform a laminating process.

In the laminating process, the upper FFC fabric, the conductor wires and the lower FFC fabric are moved downward while passing between two upper heating rollers and between two lower two heating rollers, and are pressurized and heated while passing through the two pairs of heating rollers. After the laminating process, a slitting process is performed where both ends of the fabrics for the FFC are cut in the width direction.

During the laminating process, a pressure in a range of 2 ∼ 3 kgf/cm² and a temperature in a range of 140∼180 °C are applied to the upper and the lower FFC fabrics, but the higher pressure and temperature are applied when the FFC fabrics are passing through between the two heating rollers at the lower side than the two upper heating rollers.

Another method for manufacturing the FFC is disclosed in Korean Patent No. 10-1135108 (Flexible Flat Cable Manufacturing Method). In this patent, a thermal bonding of the reinforcing film is performed after the laminating process, and the FFC fabrics and conductor wires are moved in the horizontal direction during the laminating and the thermal bonding of the reinforcing film process and the laminating process is performed only with a pair of heating rollers.

### [Prior Technical Literature]

### [Patent Literature]

Registration Patent No. 10-0473632 (Flexible Flat Cable Laminating Method)
Registered Patent No. 10-1135108 (Flexible Flat Cable Manufacturing Method)

### [Summary of Invention]

### [Problem to be Solved]

In general, a film made of Poly Ethylene Terephthalate (hereinafter, abbreviated as "PET") has been used as upper and lower insulating coating layers corresponding to an insulating coating layer of the FFC. However, a PCT film is more advantageous than a PET film to be used as an insulating coating layer of FFC because a PCT resin has superior properties (heat resistance, dimensional stability, chemical resistance, weather resistance, moisture resistance, insulation, etc.) over a PET resin thereby the PCT resin can be used in harsh environment where the PET resin cannot be used such environment. Nevertheless, the reason why the PCT film was not used as an insulating coating layer for the FFC was because the PCT resin could not be processed into a film form due to the fast hardening property of PCT resin, and recently (around the end of year 2018), SKC succeeded in mass production of the for the first time worldwide thereby it is possible to utilize the PCT film as an insulating coating layer for the FFC.

However, the above-introduced patents do not propose an FFC using a PCT film as an insulating coating layer, and further, do not suggest a method for manufacturing such an FFC. Accordingly, the present invention is to provide an FFC using a PCT film as an insulating coating layer, and a method for manufacturing the FFC.

### [Means to Solve Problems]

An embodiment of the present invention provides an FFC using a PCT film as an insulating coating layer, the FFC comprising: a lower insulating coating layer made of a PCT film; a lower adhesive layer made of polyester formed through a lower primer layer made of polyurethane material on the upper surface of the lower insulating coating layer; an upper insulating coating layer made of a PCT film; an upper adhesive layer made of polyester formed through an upper primer layer made of polyurethane material on a lower surface of the upper insulating coating layer; and a conductor wire layer interposed between the lower adhesive layer and the upper adhesive layer.

The total thickness of the lower insulating coating layer, the lower primer layer, the lower adhesive layer, the conductor wire layer, the upper adhesive layer, the upper primer layer and the upper insulating coating layer may be formed within a range of 140 µm to 206 µm.

In this case, the sum of the thickness of the lower insulating coating layer and the thickness of the lower primer layer can be formed within the range of 25 µm to 38 µm, the thickness of the lower adhesive layer can be formed within the range of 30 µm to 40 µm, and the thickness of the conductor wire layer can be formed within the range of 30 µm to 50 µm, the thickness of the upper adhesive layer can be formed within the range of 30 µm to 40 µm, and the sum of the thickness of the upper insulating coating layer and the thickness of the upper primer layer can be formed within the range of 25 µm to 38 µm. In addition, the conductor wire layer is made of copper.

The total thickness of the lower insulating coating layer, the lower primer layer, the lower adhesive layer, the conductor wire layer, the upper adhesive layer, the upper primer layer and the upper insulating coating layer may be formed within the range of 166 µm to 234 µm.

In this case, the sum of the thickness of the lower insulating coating layer and the thickness of the lower primer layer can be formed within the range of 38 µm to 52 µm, the thickness of the lower adhesive layer can be formed within the range of 30 µm to 40 µm, and the thickness of the conductor wire layer can be formed within the range of 30 µm to 50 µm, the thickness of the upper adhesive layer can be formed within the range of 30 µm to 40 µm, and the sum of the thickness of the upper insulating coating layer and the thickness of the upper primer layer can be formed within the range of 38 µm to 52 µm. In addition, the conductor wire layer is made of copper.

The adhesive strength between each of the layers is formed by sequentially applying a pre-bonding where it requires a temperature within the range of 100 °C to 110 °C and a pressure within the range of 1 kgf/cm² to 3 kgf/cm² and a main-bonding where it requires a temperature within the range of 140 °C to 160 °C and a pressure within the range of 90 kgf/cm² to 110 kgf/cm².

When a reinforcing film layer is formed on at least one of a lower surface end of the lower insulating coating layer and an upper surface end of the upper insulating coating layer, the adhesive strength between the insulating coating layer and the reinforcing film layer is formed by a post-bonding where it requires a temperature within the range of 110 °C to 130 °C and a pressure within the range of 1 kgf/cm² to 3 kgf/cm² after the main-bonding.

The main-bonding is preferably made where the same temperature is applied to the lower insulating coating layer and the upper insulating coating layer, and the pre-bonding is preferably made where it is not interfered by the temperature of the main-bonding.

The PCT film used as the upper and lower insulating coating layers is preferably an ultraviolet pre-treatment PCT film pretreated by irradiation with ultraviolet rays. At this time, the ultraviolet rays are used having a wavelength in the range of 170 nm to 180 nm.

Other embodiments of the present invention provide a method of manufacturing an FFC using a PCT film as an insulating coating layer.

An embodiment of the above manufacturing method includes a lamination process of laminating while supplying a plurality of conductor wires between two FFC fabrics having an adhesive bonded structure through a primer on an insulating coating fabric made of a PCT film. And the lamination process includes a first lamination in which a temperature in the range of 100 °C to 110 °C and a pressure in the range of 1 kgf/cm² to 3 kgf/cm² is applied to the two fabrics for the FFC; a second lamination in which a temperature within a range of 140 °C. to 160 °C and a pressure within a range of 90 kgf/cm² to 110 kgf/cm² is applied to the two fabrics for FFC immediately after the first lamination was performed.

In the second lamination, the two FFC fabrics and conductor wires are moved in a vertical direction and passing between a pair of second heating rollers, and in the first lamination, the two FFC fabrics and conductor wires are passing between a pair of first heating rollers having no heat interference by the temperature for the second lamination.

In a case where exposed windows for exposing the conductor wires are formed on the FFC fabric with a constant distance, the lamination process includes a third lamination performed after the second lamination. And in the third lamination, a reinforcing film is laminated on the FFC fabric facing the exposed windows at a temperature within the range of 110 °C to 130 °C and a pressure within the range of 1 kgf/cm² to 3 kgf/cm². In the third lamination, the fabric and conductor wires for the FFC are heated and pressed together with the reinforcing film by a pair of heating plates.

Another embodiment of the above manufacturing method includes a lamination process for laminating a first FFC fabric where a structure having an adhesive adhered through a primer on an insulating film fabric made of PCT film and a plurality of conductor wires printed on the adhesive and a second FFC fabric where structure having an adhesive adhered through a primer on an insulating film fabric made of PCT film. The lamination process may include a first lamination process where it requires a temperature within a range of 100 °C to 110 °C and a pressure within a range of 1 kgf/cm² to 3 kgf/cm² being applied to the two FFC fabrics; and a second lamination process where it requires a temperature within a range of 140 °C to 160 °C and a pressure within a range of 90 kgf/cm² to 110 kgf/cm² being applied to the two FFC fabrics immediately after the first lamination process was performed.

In the second lamination process, the two FFC fabrics are moved in a vertical direction and passing between a pair of second heating rollers, and in the first lamination process, the two FFC fabrics are passing between a pair of first heating rollers having no heat interference by the temperature for the second lamination process.

In a case where exposed windows for exposing the conductor wires are formed on the FFC fabric with a constant distance, the lamination process includes a third lamination process performed after the second lamination process. And in the third lamination process, a reinforcing film is laminated on the FFC fabric facing the exposed windows at a temperature within the range of 110 °C to 130 °C and a pressure within the range of 1 kgf/cm² to 3 kgf/cm². In the third lamination process, the fabric and conductor wires for the FFC are heated and pressed together with the reinforcing film by a pair of heating plates.

In another embodiment of the above manufacturing method, when the lamination process of the above two embodiments is performed, an ultraviolet pre-treatment PCT film which was pre-treated by irradiation with ultraviolet rays is use as an insulating PCT film fabric. In this case, the ultraviolet ray is used having a wavelength in the range of 170 nm to 180 nm.

### [Effects of the Invention]

According to the present invention, an FFC using a PCT film having excellent physical properties (heat resistance, dimensional stability, chemical resistance, weather resistance, moisture resistance, insulation, etc.) compared to a PET film as an insulating coating layer is provided. There is also an effect that sufficient adhesive strength can be provided.

In addition, according to the present invention, while using the PCT film as an insulating coating layer, the FFC having sufficient adhesive strength between the layers can be easily and quickly manufactured.

### [Explanation of the Drawings]

FIGs. 1 and 2 are perspective views showing an FFC using a PCT film according to the present invention as an insulating coating layer.
FIG. 3 is a longitudinal sectional view of FIG. 1.
FIG. 4 is a longitudinal sectional view of FIG. 2.
FIG. 5 shows a method of manufacturing an FFC using a PCT film according to the present invention as an insulating coating layer.
FIG. 6 is a cross-sectional view illustrating part A of FIG. 5.
FIG. 7 is a cross-sectional view illustrating part B of FIG. 5.
FIG. 8 shows a modified example of FIG. 5.
FIG. 9 is a cross-sectional view illustrating part C of FIG. 8.
FIG. 10 is a plan view and a bottom view illustrating a slitting process and a cutting process performed after a lamination process.
FIG. 11 to FIG. 13 show a modified example of FIG. 5.

### [Description of Preferred Embodiments]

Here, preferred embodiments of an FFC using a PCT film as an insulating coating layer according to the present invention and a manufacturing method thereof will be described in detail with reference to the drawings. The terms or words used below should not be interpreted as being limited to their usual or dictionary meanings, and based on the principle that the inventor can appropriately define the concept of terms to describe his own invention in the best way. It should be, however, interpreted as a meaning and concept consistent with the technical idea of the present invention.

Below, the present invention will be separately described for an FFC using a PCT film as an insulating coating layer and a method of manufacturing the FFC. Here, the FFC is a flexible flat cable, and is abbreviated as FFC in this specification. In addition, the PCT is polycyclohexylene dimethylene terephthalate which is abbreviated as PCT in this specification.

### <FFC using PCT Film as an Insulating Coating Layer>

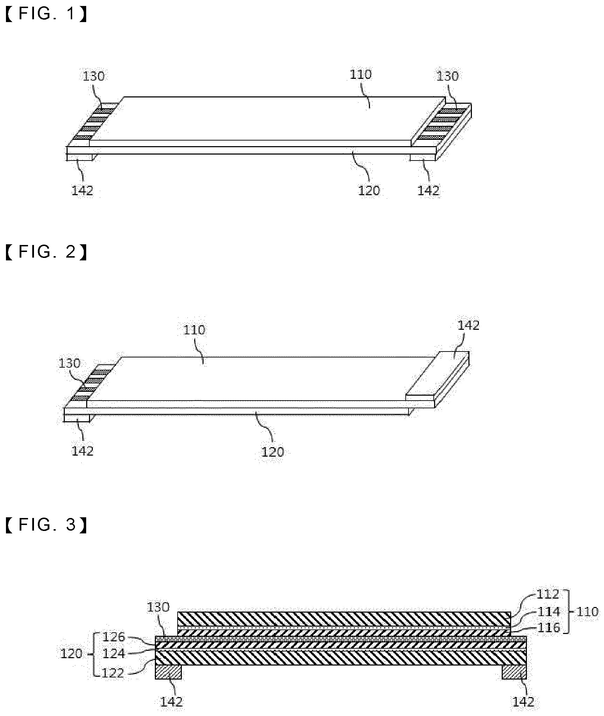

The FFC using the PCT film according to the present invention as an insulating coating layer includes a flexible upper member (110), a flexible lower member (120), and a flexible conductor wire layer (130) as shown in FIGs. 1 to 4.

The upper member 110 includes an upper insulating coating layer (112) and an upper adhesive layer (116) formed on a lower surface of the upper insulating coating layer (112) through an upper primer layer (114) as a medium. In addition, the lower member (120) includes a lower insulating coating layer (122) and a lower adhesive layer (126) formed on an upper surface of the lower insulating coating layer (122) through a lower primer layer (124) as a medium. The conductor wire layer (130) is a layer composed of a plurality of conductor wires and is interposed between the lower adhesive layer (126) and the upper adhesive layer (116).

In the present invention, a PCT film is used as the upper and the lower insulating coating layers (112, 122), and a polyurethane-based resin is used as the material of the upper and the lower primer layers (114, 124), and a polyester-based resin is used as the material of the upper and lower adhesive layers (116, 126).

The PCT resin has an advantage in heat resistance, chemical resistance and moisture resistance compared to the PET resin. From a manufacturing point of view, the insulating coating layers (112, 122) and adhesive layers (116, 126) made of PCT film with excellent heat resistance, chemical resistance and moisture resistance have a disadvantage of making it difficult to firmly adhere even if the primer layers (114, 124) are interposed to assist adhesion between the insulating coating layers (112, 122) and the adhesive layers (116, 126). Therefore, in the case of using the PCT film as the insulating coating layers (112, 122) of the FFC according to the present invention, it is required to provide a technical means to secure sufficient adhesive strength between the respective layers, particularly, the insulating coating layers (112, 122) and the adhesive layers (116, 126).

In the present invention, a sequential application of a pre-bonding and a main-bonding is adopted as the above technical means. In the pre-bonding, the layers (112, 114, 116, 130, 126, 124, 122) are bonded at a temperature within the range of 100 °C to 110 °C and a pressure within the range of 1 kgf/cm² to 3 kgf/cm². The layers (112, 114, 116, 130, 126, 124, 122) are adhered at a temperature in the range of 140 °C to 160 °C and a pressure in the range of 90 kgf/cm² to 110 kgf/cm². Therefore, in the FFC according to the present invention, each of the layers (112, 114, 116, 130, 126, 124, 122) are bonded to each other with sufficient adhesive strength formed by the sequential application of the pre-bonding and the main-bonding as described above.

The above main-bonding is preferably made in a form in which the same temperature is applied to the lower insulating coating layer (122) and the upper insulating coating layer (112). In this example, heat and pressure is applied from the left and right sides while each of the layers (112, 114, 116, 130, 126, 124, 122) that have been fixed upright in a vertical direction.

It may be considered a main-bonding formation where heat and pressure is applied from both sides of the upper and lower sides while the layers (112, 114, 116, 130, 126, 124, 122) through the pre-bonding are laid horizontally. However, in this case, since the heat with a high main-bonding temperature applied to the lower insulating coating layer (122) rises to the upper insulating coating layer (112) thereby the upper insulating coating layer (112) is affected, there occurs the difference in thermal characteristics between the upper and lower insulating coating layers (112, 122) of the FFC. In particular, since the PCT film is more sensitive to heat than the PET film, the difference in thermal characteristics between the upper and lower insulating coating layers (112, 122) may be unintentionally large due to the heat of the main-bonding temperature rising to the upper insulating coating layer (112). Therefore, it is preferable that the main-bonding is made in a state where each of the layers (112, 114, 116, 130, 126, 124, 122) is upright in the vertical direction.

The pre-bonding is preferably formed where there is no thermal interference with respect to the temperature at the main-bonding. Like the previous example, if the main-bonding is made in a state where each of the layers (112, 114, 116, 130, 126, 124, 122) is upright in the vertical direction, each of the layers (112, 114, 116, 130, 126, 124 , 122) is made at a position deviated from the vertical top of the main-bonding position.

If the pre-bonding is formed at the vertical top of the main-bonding position, the pre-bonding environment can be affected by rising of heat due to a high main-bonding temperature thereby the pre-bonding can have thermal interference due to the main-bonding temperature. As a result, it causes a problem where a temperature condition for the pre-bonding is differed to an intended temperature condition for the pre-bonding. Therefore, in the present invention, it is preferable to have the pre-bonding being formed without the thermal interference caused by the main-bonding temperature.

The thickness of the FFC and each of the layers (112, 114, 116, 130, 126, 124, 122) may be set differently depending on the purpose of the FFC.

For example, when the FFC is used as a vehicle interior for the purpose of signal transmission, the total thickness of the FFC (meaning the total thickness of each of the layers (112, 114, 116, 130, 126, 124, 122)) may be formed within the range of 140 µm 206 µm. In this case, the sum of the thickness of the lower insulating coating layer (122) and the thickness of the lower primer layer (124) may be formed within the range of 25 µm to 38 µm, the thickness of the lower adhesive layer (126) can be formed within the range of 30 µm to 40 µm, the thickness of the conductor wire layer (130) can be formed within the range of 30 µm to 50 µm, the thickness of the upper adhesive layer (116) can be formed within the range of 30 µm to 40 µm, and the sum of the thickness of the upper insulating coating layer (112) and the upper primer layer (114) can be formed within the range of 25 µm to 38 µm. In addition, copper is used as the material of the conductor wire layer (130).

On the other hand, when the FFC is used as a vehicle exterior for signal transmission or power supply, the total thickness of the FFC (means the total thickness of each of the layers (112, 114, 116, 130, 126, 124, 122)) may be formed within the range of 166 µm to 234 µm. In this case, the sum of the thickness of the lower insulating coating layer (122) and the thickness of the lower primer layer (124) can be formed within the range of 38 µm to 52 µm, the thickness of the lower adhesive layer (126) can be formed within the range of 30 µm to 40 µm, the thickness of the conductor wire layer (130) can be formed within the range of 30 µm to 50 µm, the thickness of the upper adhesive layer (116) can be formed within the range of 30 µm to 40 µm, and the sum of the thickness of the upper insulating coating layer (112) and the upper primer layer (114) can be formed within the range of 38 µm to 52 µm. In addition, copper is used as the material of the conductor wire layer (130).

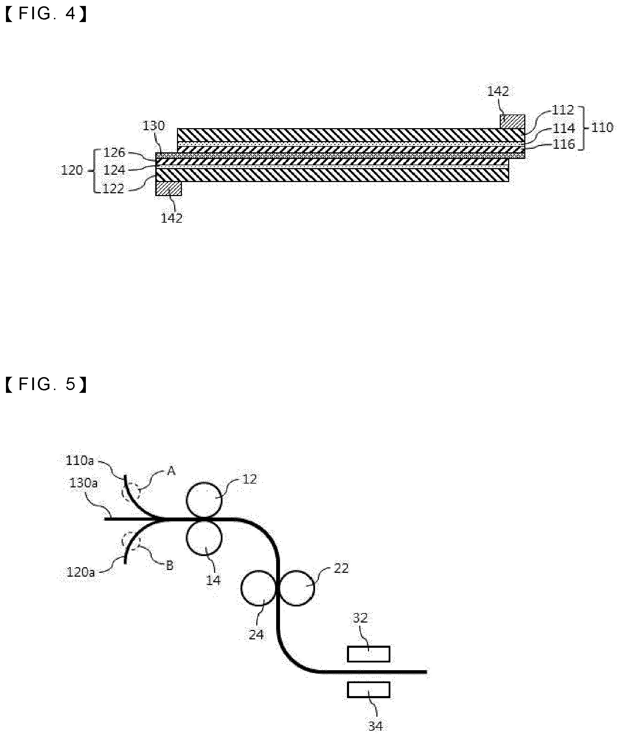

Meanwhile, there is a case where both ends of the conductor wire layer (130) are exposed to the outside for connection with a connector (not shown) for the FFC. In this case, both ends of the conductor wire layer (130) are exposed in the same direction as shown in FIGs. 1 and 3 or in an opposite direction as shown in FIGs. 2 and 4.

In this way, when both ends of the conductor wire layer (130) are exposed to the outside, it is common that a reinforcing film layer (142) is provided on the outer surfaces of the insulating coating layers (112, 122) to keep both ends of the FFC flat and to easily couple the connector to both ends of the FFC. For example, as shown in FIGs. 1 and 3, when both ends of the conductor wire layer (130) are exposed upward, the reinforcing film layer (142) is provided on both ends of the lower surface of the lower insulating coating layer (122), and as shown in FIGs. 2 and 4, when one end of the conductor wire layer (130) is exposed to the top and the opposite end is exposed to the bottom, the reinforcing film layer (142) is provided on the one end of the bottom surface of the lower insulating covering layer (122) and is provided on the opposite end of the top surface of the upper insulating covering layer (112).

For the FFC according to the present invention, the adhesive strength between the insulating coating layers (112, 122) and the reinforcing film layer (142) is the one formed through a post-bonding after the main-bonding. For the post-bonding, the reinforcing film layer (142) is adhered to the insulating coating layers (112, 122) at a temperature in the range of 110 °C. to 130 °C and with a pressure in the range of 1 kgf/cm² to 3 kgf/cm². The reinforcing film layer (142) may have a structure where a polyester-based adhesive is adhered to one surface of a PCT film or a PET film.

### <Manufacturing Method of the FFC using PCT Film as Insulating Coating Layer>

The method of manufacturing an FFC using a PCT film as an insulating coating layer according to the present invention is a method for manufacturing the above-described FFC, and it includes a lamination process applied during a roll-to-roll process.

As shown in FIG. 5, in the lamination process, a plurality of conductor wires (130a) are provided between an upper FFC fabric (110a) and a lower FFC fabric (120a).

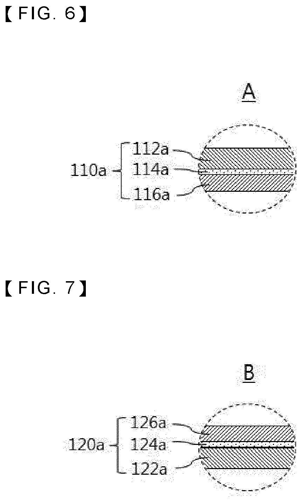

Both the upper FFC fabric (110a) and the lower FFC fabric (120a) has a structure, as shown in FIGs. 6 and 7, where one side of the insulating coating fabrics (112a, 122a) are adhered to adhesives (116a, 126b) through primers (114a, 124a).

The coating fabrics (112a, 122a) of the upper and the lower FFC fabrics (110a and 120a) are members to be the upper and the lower insulating covering layers (112, 122) of the FFC, respectively, and a PCT film made of the PCT resin is used. In addition, the primers (114a, 124a) of the upper and the lower FFC fabrics (110a, 120a) are members to be the upper and the lower primer layers (114, 124) of the FFC, respectively, and are made of polyurethane-based resin. The adhesives (116a, 126a) of the upper and the lower FFC fabrics (110a, 120a) are members to be the upper and the lower adhesive layers (116, 126) of the FFC, respectively, and are made of polyester-based resin.

When the lamination process stated above is performed, the upper and the lower FFC fabrics (110a, 120a) are running in a state where the adhesive (116a) of the upper FFC fabric (110a) and the adhesive (126a) of the lower FFC fabric (120a) are in contact with each other and the conductor wires (130a) are running with the upper and the lower FFC fabrics (110a, 120a) while they are continuously supplied between the two adhesives (116a, 126a).

The lamination process includes a first lamination process and a second lamination process.

In the first lamination process, the upper and the lower FFC fabrics (110a, 120a) and conductor wires (130a) are run in a horizontal direction and passing between a pair of first heating rollers (12, 14) positioned up and down. In this case, a temperature within the range of 100 °C to 110 °C and a pressure within the range of 1 kgf/cm² to 3 kgf/cm² is applied to the upper and the lower FFC fabrics (110a, 120a) by the first heating rollers (12, 14). Since the first lamination process is a process for the pre-bonding of the upper and the lower FFC fabrics (110a, 120a) while maintaining the alignment of the conductor wires (130a), a relatively low temperature and low pressure is adopted.

In the second lamination process, the upper and the lower FFC fabrics (110a, 120a) and the conductor wires (130a) immediately from the first lamination process are passing a pair of second heating rollers (22, 24) positioned left and right while they are run in the vertical direction. In this case, a temperature in the range of 140 °C to 160 °C and a pressure in the range of 90 kgf/cm² to 110 kgf/cm² is applied to the upper and the lower FFC fabrics (110a, 120a) by the second heating rollers (22, 24).

In the second lamination, a case where the upper and the lower FFC fabrics (110a, 120a) and the conductor lines (130a) are run in a horizontal direction may be considered. In this case, however, since the heat with high temperature applied to the lower FFC fabric (120a) rises to the upper FFC fabric (110a) thereby affecting the upper FFC fabric (110a), an unintended problem is occurred to the coating fabrics (112a, 122a) of the upper and the lower FFC fabrics (110a, 120a) where a different temperature condition is applied to each fabric. In addition, a phenomenon where residual heat remaining on the lower FFC fabric (120a) immediately after the second lamination process rises to the upper FFC fabric (110a) can also be a reason for the problem as stated above. Therefore, in the second lamination process, it is better to run the upper and the lower FFC fabrics (110a, 120a) and the conductor lines (130a) in a vertical direction as described in the present invention.

Unlike previously described, a case where the upper and lower FFC fabrics (110a, 120a) and the conductor lines (130a) are run in a vertical direction may be considered even in the first lamination process. In this case, however, since heat due to the high temperature of the second heating rollers (22, 24) rises and affects the first lamination temperature environment, there is a problem where a temperature condition is different from an intended temperature condition for the first lamination condition. Therefore, in the first lamination, it is preferable that the upper and the lower FFC fabrics (110a, 120a) and the conductor wires (130a) are run in a horizontal direction unlike in the second lamination process.

The thickness of the upper and lower FFC fabrics (110a, 110b) and the thickness of the conductor wires (130a) can be appropriately selected as the thickness of the FFC described above.

Meanwhile, the lamination process may include a third lamination process performed after the second lamination process which will be described below.

For the FFC, both ends of the conductor wire layer (130a) may be exposed to the outside as described above for connection with the connector (not shown). For this exposure, an exposed window (140) is perforated to at least one of the upper and the lower FFC fabrics (110a, 120a) before going through the lamination process.

As shown in FIG. 1, when both ends of the conductor wire layer (130) are exposed in the same direction, only one of the upper and the lower FFC fabrics (110a, 120a) is perforated with a constant interval. On the other hand, when both ends of the conductor wire layer (130) are exposed in different directions as shown in FIG. 2, the exposed window (140) is alternately perforated with a constant interval in the upper and the lower FFC fabrics (110a, 120a). For example, the exposed window (140) is formed on the upper FFC fabric (110a), then the exposed window (140) is formed on the lower FFC fabric (120a), and then exposed window (140) is formed again on the upper FFC fabric (110a).

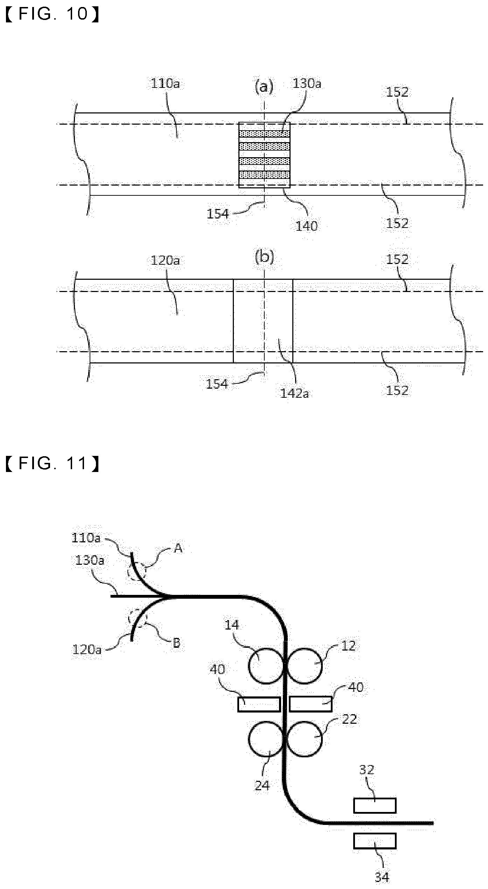

The third lamination process is formed after the upper and the lower FFC fabrics (110a, 120a) having the exposed window (140) perforated through the first and second lamination processes, and in the third lamination process, a reinforcing film (142a) is thermally compressed to the coating fabrics (112a, 122a) of the FFC fabrics (110a, 120a) facing the exposed window (140). For example, if the exposed window (140) was perforated in the upper FFC fabric (110a) as shown in FIG. 10, the reinforcing film (142a) is thermally compressed to the coating fabrics (112a, 122a) of the FFC fabrics (110a, 120a) while it is located to the bottom of the exposed window (140).

In the third lamination process, as shown in FIG. 5, the upper and lower FFC fabrics (110a, 120a) and conductor wires (130a) are passing between a pair of heating plates (32, 34) positioned vertically and are continuously and horizontally run. The reinforcing film (142a), which is periodically provided, is thermally compressed to the coating fabrics (112a, 122a) of the FFC fabrics (110a, 120a) while periodically pressed and heated by the heating plates (32, 34). In this case, the heating plates (32, 34) apply a temperature within the range of 110 °C to 130 °C and a pressure within the range of 1 kgf/cm² to 3 kgf/cm² to the FFC fabrics (110a, 120a) and the reinforcing film (142a).

The reinforcing film (142) has a structure where an adhesive made of a polyester-based resin is adhered to one surface of a PCT film or a PET film.

After the third lamination process is performed, a slitting process and a cutting process are sequentially performed. In the slitting process, both ends of the FFC fabrics (110a, 120a) in the width direction are cut along the slitting line (152) as shown in FIG. 10. After the slitting process is performed, the FFC fabrics (110a, 120a) may have a width smaller than the width of the exposed window 140. In the cutting process, the FFC fabrics (110a, 120a), the conductor wires (130a) and the reinforcing film (142a) are cut along the cutting line (154) located in the center of the length direction of the exposure window (140), then as a result, it becomes the FFC as shown in FIG. 1 or FIG. 3.

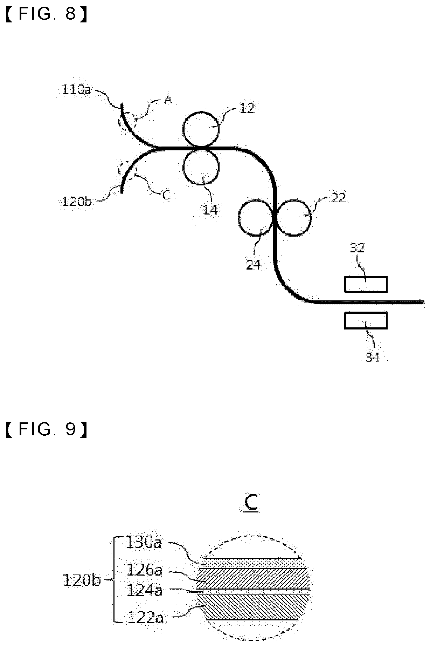

Meanwhile, it has been described above that conductor wires (130a) are provided separately from the FFC fabrics (110a, 120a). However, the conductor wires (130a) may be printed on any one of the adhesives (116, 126) of the upper or the lower FFC fabric (110a, 120a) before the lamination process is performed. As an example of this, in FIGs. 8 and 9, a lower FFC fabric (120b) is disclosed where the conductor wires (130a) are printed on the adhesive (126a).

### <Modified Embodiments>

The modified embodiments of the above-described FFC and its manufacturing method will be described below.

Previously, it has been described that a PCT film is used as the insulating coating layers (112, 122) of the FFC and the coating fabrics (112a, 122a) constituting the insulating coating layers (112, 122). Here, it is preferable to use an ultraviolet pre-treated PCT film gone through an ultraviolet pre-treatment process when the PCT film is used to constitute the insulating coating layers (112, 122) and the coating fabrics (112a, 122a). Certainly, the PCT film may be used before the UV pretreatment.

In the ultraviolet pretreatment process, ultraviolet ray is irradiated only to the PCT film to be used as the coating fabrics (112a, 122a) before the primers (114a, 124a) and the adhesives (116a, 126a) are laminated. At this time, as for the irradiated ultraviolet ray, that having a wavelength in the range of 170 nm to 180 nm is used.

Although the PCT film has excellent dimensional stability at high temperature even before the UV pre-treatment, the UV pre-treated PCT film has better dimensional stability at high temperature than the PCT film without the UV pre-treatment. Therefore, when the UV pre-treated PCT film is used for the insulating coating layers (112, 122) and the coating fabrics (112a, 122a), deformation such as distortion and shrinkage of the coating fabrics (112a, 122a) during the lamination process can be affirmatively prevented.

In addition, the UV pre-treated PCT film has better adhesion than the PCT film without the UV pre-treatment. Therefore, when the UV pre-treated PCT film is used for the insulating covering layers (112, 122) and the coating fabrics (112a, 122a), it is also advantageous to obtain a stronger adhesive strength between the insulating covering layers (112, 122) and the adhesive layers (116, 126), and between the coating fabrics (112a, 122a) and the adhesive layers (116, 126).

Previously, to prevent the temperature of the second lamination process (main-bonding) from affecting the temperature environment of the first lamination process (pre-bonding), it was focused to the case where the FFC fabrics (110a, 120a, 120b) are run in the horizontal direction in the first lamination process.

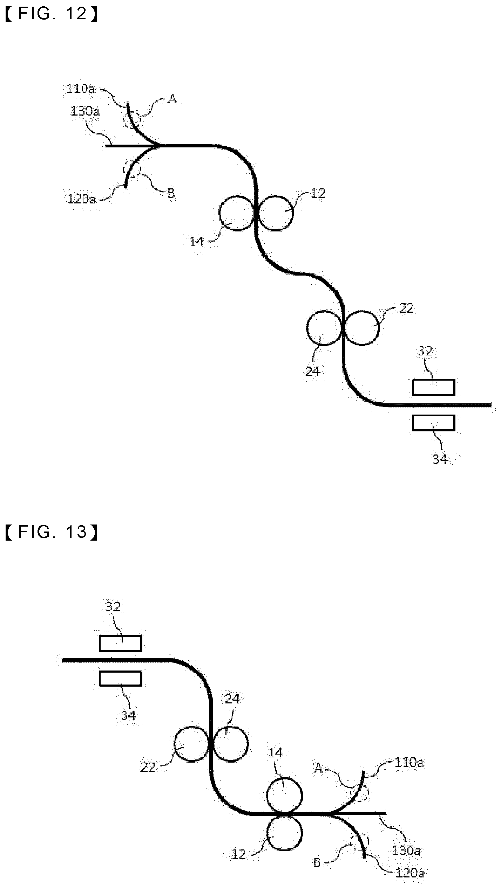

However, even if the running direction of the FFC fabrics (110a, 120a, 120b) in the first lamination process is to be vertical, it is possible to prevent from affecting the temperature environment of the first lamination process. In this case, as shown in FIG. 11, a heat shield plate (40) is positioned vertically above the place where the second lamination process is performed and is to pass the FFC fabrics (110a, 120a, 120b), and the first lamination process may be performed at the top of the heat shield plate (40). In addition, as shown in FIG. 12, the first lamination process may be performed at a location deviating from the vertical upper portion to the left (or to the right) where the second lamination process is performed.

Previously, it was described that the FFC fabrics (110a, 120a, 120b) are run down in the second lamination process. However, as shown in FIG. 13, the FFC fabrics (110a, 120a, 120b) may be run upward in the second lamination process, and this is the same for the modified embodiments of FIGs. 11 and 12.

As described above, although the present invention has been described by limited embodiments and drawings, the present invention is not limited, and the scope of the present invention can be freely and variously changed and modified within the equivalent scope of the technical and following claims to be described by those of ordinary skill in the art to which the present invention pertains. The above-described embodiments may be variously combined as well.

### [Description of Numbers]

- 110:: upper member of FFC
- 112:: upper insulating coating layer (PCT film)
- 114:: upper primer layer
- 116:: upper adhesive layer
- 120:: lower member of FFC
- 122:: lower insulating coating layer (PCT film)
- 124:: lower primer layer
- 126:: lower adhesive layer
- 130:: conductor wire layer
- 142:: reinforcement film layer
- 110a:: upper FFC fabric
- 120a, 120b:: lower FFC fabric
- 112a, 122a:: coating fabric (PCT film)
- 114a, 124a:: primer
- 116a, 126a:: adhesive
- 130a:: conductor wire
- 140:: exposure window
- 142:: reinforcement film
- 152:: slitting line
- 154:: cutting line
- 12, 14:: first heating roller
- 22, 24:: second heating roller
- 32, 34:: heating plate
- 40:: heat shield plate

## Claims

1. An FFC utilizing an insulating coating layer made of a PCT film comprising:
a lower insulating coating layer made of the PCT film;
a lower adhesive layer made of a polyester-based resin material formed through a lower primer layer made of a polyurethane-based resin material on an upper surface of the lower insulating coating layer;
an upper insulating coating layer made of a PCT film;
an upper adhesive layer made of a polyester-based resin formed through an upper primer layer made of a polyurethane-based resin material on a lower surface of the upper insulating coating layer; and
a conductor wire layer interposed between the lower adhesive layer and the upper adhesive layer.

2. The FFC of claim 1 further comprising:
a total thickness of the lower insulating coating layer, the lower primer layer, the lower adhesive layer, the conductor wire layer, the upper adhesive layer, the upper primer layer and the upper insulating coating layer being as formed in a range of 140 µm to 206 µm.

3. The FFC of claim 2 further comprising:
a sum of a thickness of the lower insulating coating layer and a thickness of the lower primer layer being formed within a range of 25 µm to 38 µm;
a thickness of the lower adhesive layer being formed within a range of 30 µm to 40 µm;
a thickness of the conductor wire layer being formed within a range of 30 µm to 50 µm;
a thickness of the upper adhesive layer being formed within a range of 30 µm to 40 µm;
and
a sum of the thickness of the upper insulating coating layer and the thickness of the upper primer layer being formed within a range of 25 µm to 38 µm.

4. The FFC of claim 3 further comprising:
the conductor wire layer being made of a copper.

5. The FFC of claim 1 further comprising:
a total thickness of the lower insulating coating layer, the lower primer layer, the lower adhesive layer, the conductor wire layer, the upper adhesive layer, the upper primer layer and the upper insulating coating layer being formed within a range of 166 µm to 234 µm.

6. The FFC of claim 5 further comprising:
a sum of a thickness of the lower insulating coating layer and a thickness of the lower primer layer being formed within a range of 38 µm to 52 µm;
a thickness of the lower adhesive layer being formed within a range of 30 µm to 40 µm;
a thickness of the conductor wire layer being formed within a range of 30 µm to 50 µm;
a thickness of the upper adhesive layer being formed within a range of 30 µm to 40 µm; and
a sum of a thickness of the upper insulating coating layer and a thickness of the upper primer layer being formed within a range of 38 µm to 52 µm.

7. The FFC of claim 6 further comprising:
the conductor wire layer being made of copper.

8. The FFC of claim 1 further comprising:
an adhesive strength between each of the layers being formed by sequentially applying a pre-bonding under a temperature within a range of 100 °C to 110 °C and a pressure within a range of 1 kgf/cm² to 3 kgf/cm²; and
a main-bonding under a temperature within a range of 140 °C to 160 °C and a pressure within a range of 90 kgf/cm² to 110 kgf/cm².

9. The FFC of claim 8 further comprising:
a reinforcing film layer formed on at least one of a lower surface end of the lower insulating coating layer and an upper surface end of the upper insulating coating layer
wherein an adhesive strength between the insulating coating layer and the reinforcing film layer is formed by a post-bonding adhered under a temperature in a range of 110 °C to 130 °C and a pressure in a range of 1 kgf/cm² to 3 kgf/cm² after the main-bonding.

10. The FFC of claim 8 further comprising:
the main-bonding being formed by applying a same temperature to the lower insulating coating layer and the upper insulating coating layer.

11. The FFC of claim 10 further comprising:
the pre-bonding being formed without a temperature interference when the main-boding being formed.

12. The FFC of claim 1 wherein:
the PCT film is pre-treated by irradiation of an ultraviolet ray.

13. The FFC of claim 12 wherein:
the ultraviolet ray has a wavelength in a range of 170 nm to 180 nm.

14. A method of manufacturing an FFC utilizing an insulating coating layer made of a PCT film comprising the steps of:
a lamination process of laminating while supplying a plurality of conductor wires between two FFC fabrics having an adhesive adhered structure to an insulating coating fabric made of the PCT film through a primer wherein the lamination process further includes
a first lamination process performed on the two FFC fabrics under a temperature within a range of 100 °C to 110 °C and a pressure within a range of 1 kgf/cm² to 3 kgf/cm²; and
a second lamination process performed on the two FFC fabrics immediately after the first lamination process under a temperature in a range of 140 °C to 160 °C and a pressure in a range of 90 kgf/cm² to 110 kgf/cm².

15. The method of claim 14 further comprising the steps of:
the two FFC fabrics and the conductor wires moving in a vertical direction and passing between a pair of second heating rollers in the second lamination process; and
the two FFC fabrics and the conductor wires passing between a pair of first rollers in the first lamination process wherein the first lamination process is to be free from a temperature interference of the second lamination process.

16. The method of claim 14 further comprising the steps of:
a third lamination process performed after the second lamination process when an exposed window for exposing the conductor wires on the FFC fabric wherein the reinforcing film is laminated to the coating fabric of the FFC fabric facing the exposed window in the third lamination process under a temperature within a range of 110 °C to 130 °C and a pressure within a range of 1 kgf/cm² to 3 kgf/cm².

17. The method of claim 16 further comprising the steps of:
the two FFC fabrics and the conductor wires moving in a vertical direction and passing between a pair of the second heating rollers in the second lamination process;
the two FFC fabrics and the conductor wires passing between a pair of the first heating rollers wherein the first lamination process is to be free from a temperature interference of the second lamination process; and
the two FFC fabrics and the conductor wires heated and suppressed together with the reinforcing film by a pair of a heating plate.

18. A method of manufacturing an FFC utilizing an insulating coating layer made of a PCT film comprising the steps of:
a lamination process of laminating a first FFC fabric having a structure wherein a first adhesive is adhered to a first insulating coating fabric made of a first PCT film through a first primer and a plurality of conductor wires are printed on the first adhesive to a second FFC fabric having a structure wherein a second adhesive is adhered to a second insulating coating fabric made of a second PCT film through a second primer wherein the lamination process further includes:
a first lamination process performed on the two FFC fabrics under a temperature within a range of 100 °C to 110 °C and a pressure within a range of 1 kgf/cm² to 3 kgf/cm²; and
a second lamination process performed on the two FFC fabrics immediately after the first lamination process under a temperature in a range of 140 °C to 160 °C and a pressure in a range of 90 kgf/cm² to 110 kgf/cm².

19. The method of claim 18 further comprising the steps of:
the two FFC fabrics moving in a vertical direction and passing between a pair of second heating rollers in the second lamination process; and
the two FFC fabrics passing between a pair of first rollers in the first lamination process wherein the first lamination process is to be free from a temperature interference of the second lamination process.

20. The method of claim 18 further comprising the steps of:
a third lamination process performed after the second lamination process when an exposed window for exposing the conductor wires on the FFC fabric wherein the reinforcing film is laminated to the coating fabric of the FFC fabric facing the exposed window in the third lamination process under a temperature within a range of 110 °C to 130 °C and a pressure within a range of 1 kgf/cm² to 3 kgf/cm².

21. The method of claim 20 further comprising the steps of:
the two FFC fabrics moving in a vertical direction and passing between a pair of the second heating rollers in the second lamination process;
the two FFC fabrics passing between a pair of the first heating rollers wherein the first lamination process is to be free from a temperature interference of the second lamination process; and
the two FFC fabrics heated and suppressed together with the reinforcing film by a pair of a heating plate in the third lamination process.

22. A method of manufacturing an FFC utilizing an insulating coating layer made of a PCT film comprising the steps of:
a lamination process of laminating while supplying a plurality of conductor wires between two FFC fabrics having an adhesive adhered structure to an insulating coating fabric made of the PCT film through a primer wherein the PCT film is an ultraviolet irradiated pre-treated PCT film.

23. A method of manufacturing an FFC utilizing an insulating coating layer made of a PCT film comprising the steps of:
a lamination process of laminating a first FFC fabric having a structure wherein a first adhesive is adhered to a first insulating coating fabric made of a first PCT film through a first primer and a plurality of conductor wires are printed on the first adhesive to a second FFC fabric having a structure wherein a second adhesive is adhered to a second insulating coating fabric made of a second PCT film through a second primer wherein the PCT film is an ultraviolet irradiated pre-treated PCT film.

24. The method of claim 22 or 23 further comprising the steps of:
irradiating an ultraviolet ray having a wavelength in the range of 170 nm to 180 nm to the PCT film.
